# EUROPÄISCHE PATENTSCHRIFT

(11) **EP 2 011 217 B1**
(45) Veröffentlichungstag und Bekanntmachung des Hinweises auf die Patenterteilung: **16.03.2016**
(21) Anmeldenummer: 07724428.3
(22) Anmeldetag: 20.04.2007
(51) Int. Cl.: H02M 1/00

(54) **HOCHSETZSTELLER-LEISTUNGSFAKTORREKTURSCHALTUNG (BOOST-PFC)**
BOOST POWER FACTOR CORRECTION CIRCUIT (BOOST PFC)
CIRCUIT DE CORRECTION DU FACTEUR DE PUISSANCE D'UN HACHEUR ÉLÉVATEUR (BOOST-PFC)

(30) Priorität: 21.04.2006 DE 102006018577
(43) Veröffentlichungstag der Anmeldung: 07.01.2009
(73) Patentinhaber: Tridonic GmbH & Co KG, 6851 Dornbirn (AT)
(72) Erfinder: FINK, Jürgen, 6971 Hard (AT)
(74) Vertreter: Rupp, Christian
(86) Internationale Anmeldenummer: PCT/EP2007/003492
(87) Internationale Veröffentlichungsnummer: WO 2007/121944

(56) Entgegenhaltungen:
- EP-A- 1 603 219
- WO-A-01/82458
- WO-A-03/017453
- US-A- 5 428 286

## Beschreibung

Die vorliegende Erfindung bezieht sich allgemein auf sogenannte Hochsetzsteller-Leistungsfaktorkorrekturschaltungen (im Englischen Boost-PFC genannt), auf Verfahren zum Betrieb derartiger Schaltungen sowie auf Betriebsgeräte für Leuchtmittel, die derartige Schaltungen aufweisen.

Derartige Schaltungen dienen dazu, eine zugeführte DC- oder AC-Spannung auf ein höheres Niveau umzusetzen (Boost). Gleichzeitig können derartige Schaltungen dazu ausgelegt sein, einen Verbraucher mit einem Leistungsfaktor von nahezu 1 dazustellen (Power Factor Correction, Leistungsfaktorkorrektur).

Derartige Schaltungen finden beispielsweise Anwendung bei Betriebsgeräten für Leuchtmittel, beispielweise bei Elektronischen Vorschaltgeräten (EVGs) für Gäsentladungslampen. Wenn die Leuchtmittel hochfrequent betrieben werden sollen, wird die DC-Ausgangsspannung des Boost-PFC (oft auch "Busspannung" genannt), über Wechselrichter in eine hochfrequente AG-Spannung ungesetzt.

Da ein Boost-PFC üblicherweise nicht kurzschlussfest ist, wird der Betrieb einer derartigen Schaltung durch Steuer- und Regelschaltungen gesteuert, denen Parameter aus der Versorgungsspannung, aus der Boost-PFC-Schaltung und/oder aus dem Lastkreis (der die Leuchtmittel enthält) zurückgeführt wird.

Das Zurückführen von diesen Messparametern zu der Steuer- und Regeleinheit führt dazu, dass beim Stand der Technik zahlreiche Pins beispielsweise eines als Steuer- und Regelschaltung verwendeten ASICs belegt werden.

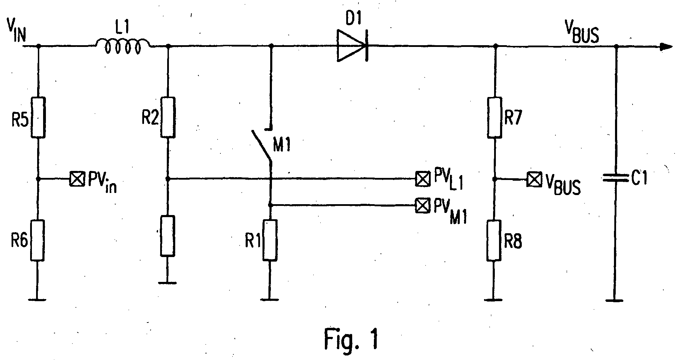

Figur 1 zeigt eine aus dem Stand der Technik bekannte Boost-PFC-Schaltung. Der Schaltung wird eine AC- oder DC-Spannung V_{IN} zugeführt. Eine Ladespule L1 ist mit einer Freilaufdiode D1 in Serie geschaltet. Über einen Schalter M1 kann ein Verbindungspunkt zwischen der Freilaufdiode und der Ladespule L1 selektiv mit Masse verbunden werden. Über die Freilaufdiode D1 kann ein Ladekondensator C1 aufgeladen werden. An der Hochpotentialseite des Ladekondensators C1 stellt sich so mehr bei entsprechender Taktung des Schalters M1 die Ausgangsspannung V_{bus} ein, die regelmäßig über der Amplitude der zugeführten Spannung V_{IN} liegt.

Es ist bekannt, die angelegte Versorgungsspannung V_{IN} über einen Spannungsteiler R5, R6 beispielsweise an einem Pin PVᵢₙ eines ASICs zu erfassen.

Weiterhin ist es bekannt, den Nulldurchgang des durch die Ladespule fließenden Stroms zu erfassen (Pin PV_{L1}).

Weiterhin kann der in dem geschlossenen Zustand des Schalters M1 durch diesen Schalter M1 fließende Strom mittels eines Meßwiderstands ("Shunt") R1 an einem Pin PV_{M1} oder PI_M1 erfasst werden.

Schließlich kann auch noch über einen Spannungsteiler R7, R8 die Ausgangsspannung V_{bus} an einem Pin PV_{bus} erfasst werden.

US 5 428 826 und WO 01/82458 sind weitere Dokumente der Standes der Technik.

Die Erfindung setzt nunmehr daran an, den schaltungstechnischen Aufwand einer derartigen Schaltung zu verringern.

Es wird erfindüngsgemäß vorgeschlagen, für zwei Messsignale nur ein einziger Pin einer ASIC-Schaltung zu benutzen. Diese kombinierte Erfassung von mehreren Parametern am gleichen Meßpunkt, aber zu unterschiedlichen Zeitpunkten wird unter Berücksichtigung einer Referenz durchgeführt. Diese Referenz wird in die Messung eingebracht und erspart die Verwendung eines Koppelgliedes zur Potentialtrennung.

Die oben angeführt Aufgabe wird erfingdungsgemäß die Merkmale der unabhängigen Ansprüche gelöst. Die abhängigen Ansprüche bilden den zentralen Gedanken der vorliegenden Erfindung besonders vorteilhafter Weise weiter.

Gemäß einem ersten Aspekt der Erfindung ist ein Verfahren zum Betrieb einer Hochsetzsteller-Leistungsfaktorkorrekturschaltung (Boost-PFC) vorgesehen, wobei die Schaltung eine mit einer Freilaufdiode in Serie geschaltete Ladespule aufweist, mit deren Entladestrom durch einen gesteuerten Schalter ein Kondensator aufgeladen wird. Der Schalter wird dabei durch eine elektronische Steuer- und/oder Regeleinheit ein- und ausgeschaltet, die an einem einzigen Eingang direkt oder indirekt den Strom durch den Schalter in Zeitdauern erfasst, in denen der Schalter geschlossen ist, und einen weiteren Betriebsparameter der Boost-PFC Schaltung in Zeitdauern erfasst, in denen der Schalter geöffnet ist.

Somit ist für diese Erfassung nur noch ein Pin einer integrierten Auswerteschaltung belegt. Bei der Erfassung des durch den Schalter fließenden Stroms wird der aktuelle Wert der Eingangsspannung V_{IN} oder der Ausgangsspannung Vₒᵤₜ berücksichtig.

Der Strom durch den Schalter bzw. eine dafür repräsentative Größe kann mit einem Schwellenwert verglichen werden. Der Schalter wird dann wieder ausgeschaltet, sobald dieser Schwellenwert erreicht bzw. überschritten wird.

Der aktuelle Wert der Eingangs- bzw. Ausgangsspannung kann direkt gemessen oder indirekt ermittelt werden.

Der erfasste weitere Betriebsparameter kann insbesondere der Nulldurchgang des durch die Ladespule (L1) fließenden Stroms sein.

Der Nulldurchgang des durch die Ladespule fließenden Stroms kann mittels einer mit der Ladespule induktiv gekoppelten Erfassungsspule dadurch ermittelt werden, dass zum Zeitpunkt des Nulldurchgangs die Spannung an der Fassungsspule eine Flanke zeigt. (Ob diese Flanke negativ oder positiv ist, hängt von der Wicklungsrichtung der Erfassungsspule relativ zu der Ladespule ab.)

Alternativ kann der erfasste weitere Betriebsparameter die Ausgangs- bzw. die Eingangsspannung der Boost-PFC-Schaltung oder der Halbbrückenstrom einer am Ausgang der Boost-PFC-Schaltung angeordneten Halbbrücke sein.

Die Steuer- und Regeleinheit kann zum Zeitpunkt des Nulldurchgangs des Stroms durch die Ladespule den zuvor ausgeschalteten Schalter wieder einschalten.

Gemäß einem weiteren Aspekt der vorliegenden Erfindung ist eine Steuer- und/oder Regeleinheit, wie beispielsweise ein ASIC vorgesehen, die/der zur Implementierung eines Verfahrens der oben angeführten Art ausgebildet ist.

Die Erfindung bezieht sich auch auf ein elektronisches Vorschaltgerät für Gasentladungslampen, das eine derartige elektronische Steuer- und/oder Regeleinheit aufweist.

Ein weiterer Aspekt der Erfindung bezieht sich auf eine Hochsetzsteller-Leistungsfaktorkorrekturschaltung (Boost-PFC).

Schließlich bezieht sich die Erfindung auch auf ein elektronisches Vorschaltgerät für Gasentladungslampen, das eine derartige Boost-PFC-Schaltung aufweist.

Weitere Merkmale Vorteile und Eigenschaften der vorliegenden Erfindung sollen nunmehr bezugnehmend auf die Figuren der begleitenden Zeichnungen näher erläutert werden.
- Figur 1: zeigt eine aus dem Stand der Technik bekannte Boost-PFC-Schaltung.
- Figur 2: zeigt eine Boost-PFC-Schaltung, die zu illustrativen Zwecken im Zusammenhang mit einem Betriebsgerät für Leuchtmittel, wie beispielsweise einem elektronischen Vorschaltgerät für Gasentladungslampen dargestellt ist,
- Figur 3: zeigt eine Boost-PFC-Schaltung, bei der an dem gleichen Punkt in der Schaltung (PV_{L1}, PI_{M1}) der Nulldurchgang des Ladespulenstroms wie auch der Schalterstrom abgegriffen werden können,
- Figur 4: zeigt Signalverläufe, wie sie an definierten Punkten der Boost-PFC-Schaltung gemäß Figur 3 auftreten,
- Figur 5: zeigt eine erfindungsgemässe Boost-PFC-Schaltung, bei der an dem gleichen Punkt in der Schaltung (PV_{L1}, PI_{M1}) der Nulldurchgang des Ladespulenstroms wie auch der Schalterstrom abgegriffen werden können,
- Figur 6: zeigt Signalverläufe, wie sie an definierten Punkten der erfindungsgemässen Boost-PFC-Schaltung gemäß Figur 5 auftreten,
- Figur 7: zeigt Signalverläufe, wie sie an definierten Punkten der erfindungsgemässen Boost-PFC-Schaltung gemäß Figur 5 auftreten,
- Figur 8: zeigt ein weiteres Ausführungsbeispiel einer erfindungsgemässen Boost-PFC-Schaltung, bei der an dem gleichen Punkt in der Schaltung (PV_{BUS}, PI_{M1}) die Ausgangsspannung wie auch der Schalterstrom abgegriffen werden können,
- Figur 9: zeigt Signalverläufe, wie sie an definierten Punkten der Boost-PFC-Schaltung gemäß Figur 8 auftreten,
- Figur 10: zeigt ein weiteres Ausführungsbeispiel einer erfindungsgemässen Boost-PFC-Schaltung, bei der an dem gleichen Punkt in der Schaltung ( PV_{IN}, PI_{M1}) die Eingangsspannung wie auch der Schalterstrom abgegriffen werden können, und
- Figur 11: zeigt ein weiteres Ausführungsbeispiel einer erfindungsgemässen Boost-PFC-Schaltung, bei der an dem gleichen Punkt in der Schaltung (PI_{M3}, PI_{M1}) der Halbbrückenstrom wie auch der Schalterstrom abgegriffen werden können.

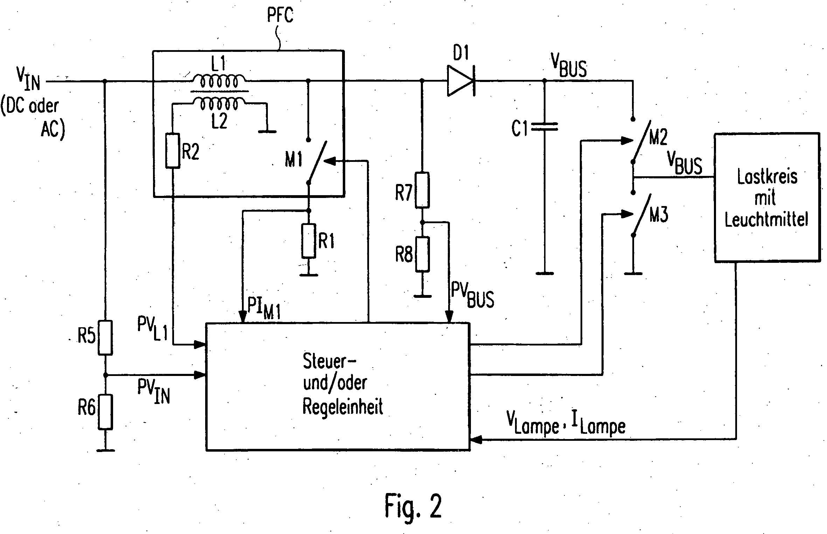

Figur 2 zeigt, wie eine PFC-Boost-Schaltung zusammen mit einer entsprechenden Steuer- und/oder Regeleinheit für den Betrieb von Leuchtmitteln verwendet werden kann.

Wie dargestellt können der erfindungsgemäßen Steuer- und/oder Regeleinheit Messgrößen aus verschiedenen Bereichen der Schaltung zugeführt werden, darunter unter anderem aus dem Bereich der Versorgungsspannung, der PFC-Boost-Schaltung, sowie aus dem Lastkreis, wobei die Leuchtmittel Teil des Lastkreises sind.

Die Ausgangsspannung V_{bus} der PFC-Boost-Schaltung kann beispielsweise über einen Wechselrichter mit zwei Schaltern M2, M3, die jeweils von der Steuer- und/oder Regeleinheit angesteuert werden, in eine hochfrequente Betriebsspannung V_{AC} für den Lastkreis umgesetzt werden. Die Leuchtmittel sind Teil dieses Lastkreises.

Die Steuer- und/oder Regeleinheit kann somit steuernd in den Lastkreis (Schalter M2, M3) sowie in die PFC-Boost-Schaltung (Schalter M1) einwirkend.

In dem in Figur 2 dargestellten erfindungsgemäßen Beispiel wird der Strom durch die Ladespule L1 der PFC-Boost-Schaltung über eine Erfassungsspule L2 und einen Widerstand R2 induktiv abgegriffen. Diese induktive Erfassung des Stroms durch die Ladespule L1 mittels der Erfassungsspule L2 stellt einen Aspekt der Erfindung dar, der im Übrigen unabhängig von der Erfassung des Ladespulenstroms und des Schalterstroms angewendet werden kann und bereits für sich selbst genommen Vorteile bringt.

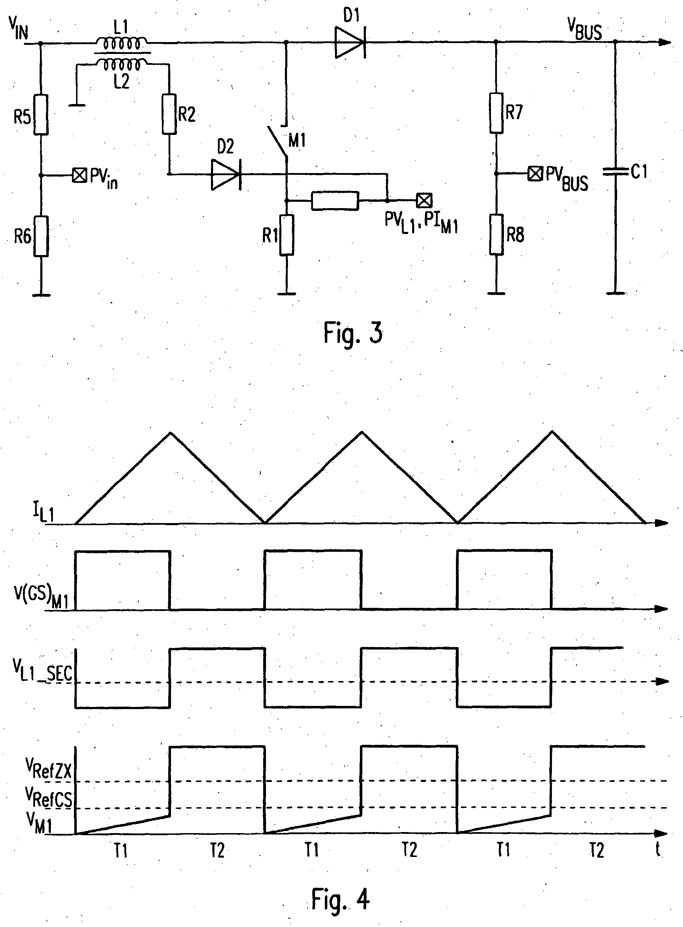

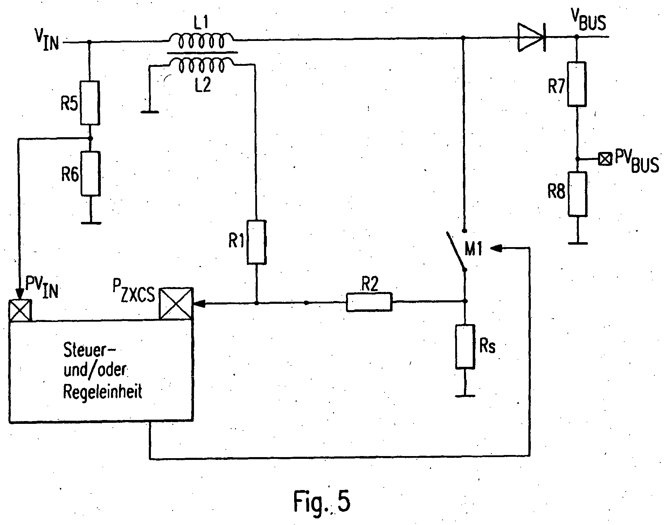

Diese induktive Erfassung des Stroms durch die Ladespule L2 kann Vorteilhafterweise, muss aber nicht, mit einer Schaltung wie in Figur 3 oder Figur 5 gezeigt kombiniert werden.

An einem einzigen Punkt der Schaltung PV_{L1}, PI_{M1} werden sowohl der Strom I_{M1} durch den geschlossenen Schalter M1 wie auch der Nulldurchgang des Stroms durch die Ladespule L1 erfasst. Dieser Punkt PV_{L1}, PI_{M1} in Figur 3 kann beispielsweise einen PIN einer ASIC-Schaltung darstellen, bzw. mit einem derartigen Pin verbunden werden.

Die induktive Erfassung L2 des Spulenstroms L1 ist durch ein Entkopplungselement, wie beispielsweise die gezeigte Diode D2 von dem Erfassungs-Pin PV_{L1}, PI_{M1} getrennt.

Zu Zeiten, zu denen der Schalter M1 geöffnet wird, kann also an diesem Punkt PV_{L1}, PI_{M1} der Nulldurchgang des Spulenstroms I_{M1} erfasst werden.

Diese Erfassung kann insbesondere in einem Vergleich mit einem Schwellenwert oder aber auch in der konkreten Erfassung des aktuellen Stromwerts liegen.

Zu Zeitdauern, in denen der Schalter M1 wie durch die Steuer- und/oder Regeleinheit angesteuert geschlossen ist, kann an diesen Punkt über den Messwiderstand R1 der Strom I_{M1} durch den Schalter M1 gemessen werden, insbesondere, um einen allzu hohen Strom (d. h. einen Strom I_{M1} über einen definierten Schwellenwert) zu vermeiden.

Das Entkoppelelement wie beispielsweise die dargestellte Diode D2 dient also zur Entkopplung der beiden Funktionen (Messung des Schalterstroms/Messung des Nulldurchgangs des Spulenstroms).

In Figur 4 sind Verläufe der verschiedenen in der Schaltung von Figur 3 auftretenden Spannungen und Ströme dargestellt.

I_{L1} zeigt dabei den Strom durch die Ladespule L1.

V(GS)_{M1} zeigt die Ansteuerspannung, die von der Steuer-Regeleinheit zur Ansteuerung des Schalters M1 ausgegeben wird.

V_{L1_SEC} zeigt den Verlauf der Spannung an der Erfassungsspule L2. V_{RefZX} zeigt einen ersten Schwellenwert.

V_{RefCS} zeigt einen zweiten Schwellenwert.

V_{M1} zeigt einen für den Schalterstrom repräsentierten Wert, der mit den Schwellenwerten V_{RefZX} und V_{RefCS} verglichen werden kann.

Die Zeitdauer T1 ist die Zeitdauer, in der der Schalter M1 durchgeschaltet ist und somit der Spulenstrom I_{L1} ansteigt.

Die Zeitdauer T2 zeigt einen Zeitabschnitt, in dem der Schalter geöffnet ist und sich somit die Energie des in der Spule L1 gespeicherten Magnetfelds über die Diode D1 zum Ladekondensator C1 hinentlädt.

Wenn der Strom I_{L1} durch die Drossel L1 ansteigt, steigt gleichzeitig auch der Strom I_{M1} durch bzw. die dafür repräsentative Größe V_{M1}.

Als eine Schutzfunktion wird dieser Schalterstrom V_{M1} mit einem Schwellenwert V_{RefCS} verglichen. Sollte dieser Referenzwert V_{RefCS} überschritten werden, wird der Schalter M1 (vorzeitig) ausgeschaltet. Ein derartiger Fall tritt in dem Szenario gemäß Figur 4 nicht auf. Vielmehr ist dort vorgesehen, dass der Schalter M1 in regelmäßigen Abständen ausgeschaltet wird.

Während dieser Zeitdauer T1, in der also der Schalter geschlossen ist, sperrt die Diode D1, da die Spannung V_{L1_SEC} der Erfassungsspule L2 negativ ist.

Wird nunmehr der Schalter M2 durch die Steuer- und Regeleinheit geöffnet (Zeitdauer T2) fällt der Strom I_{L1} durch die Drossel L1 ab. Die Spannung V_{L1_SEC} an der Erfassungsspule L2 wird positiv und verbleibt auf einen positiven Wert bis zum Nulldurchgang des Ladespulenstroms I _{L1}. Zum Zeitpunkt des Nulldurchgangs des Stroms I _{L1} durch Ladespule L1 zeigt die Spannung V_{L1_SEC} durch Erfassungsspule L2 eine (im Beispiel negative) Flanke.

Dies kann beispielsweise dadurch erfasst werden, dass ermittelt wird, dass zu diesen Zeitpunkt die Spannung V_{L1_SEC} durch die Erfassungsspule L2 einen definierten Referenzwert V_{RefZX} unterschreitet. Zu diesem Zeitpunkt des Nulldurchgangs des Spulenstroms I_{L1} schaltet die Steuer- und Regeleinheit dann wieder den Schalter ein und es folgt die Zeitdauer T1 mit eingeschaltetem Schalter M1, zu der der Spulenstrom wieder kontinuierlich ansteigt.

Das Entkopplungselement beispielsweise in Form der Diode D2 sorgt also dafür, dass beispielsweise durch ein Sperren der Diode D2 die Spulenstromerfassung von dem Schalter M2 entkoppelt ist, so dass isoliert der Strom durch den Schalter gemessen werden kann. Vergleichbar zu der Diode D2 kann auch ein Transistor oder eine kapazitive Entkopplung vorgesehen sein, die also im eingeschalteten Zustand des Schalters M1 diesen von dem Potenzial der Erfassungsspule L2 trennen.

Die oben erläuterte Erfassung des Nulldurchgangs des Ladespulenstroms und des Stroms durch den Schalter erfordert eine Potentialtrennung der Nulldurchgangserfassüng, wenn im geschlossenen Zustand des Schalters aus Sicherheitsgründen der Strom durch diesen überwacht wird. Während die Nulldurchgangserfassung des Spulenstroms erfindungsgemäß auf einer Flankenerfassung beruht und somit keine Absolutmessung erfordert, wird der Schalterstrom bekanntlich mit einem Schwellenwert verglichen, was eine Absolutwerterfassung des Schalterstrom voraussetzt.

In dem Ausführungsbeispiel von Fig. 5 ist nunmehr eine Möglichkeit gezeigt, wie auch ohne Potentialtrennung zwischen der Nulldurchgangserfassung des Spulenstroms und der Schalterstromerfassung diese Absolutmessung des Schalterstroms ausgeführt werden kann.

Wie in Fig. 5 ersichtlich ist dort kein mit der Diode D2 in Fig. 3 vergleichbares Entkopplungselement vorgesehen.

Somit wird bei der Erfassung des Schalterstroms einerseits tatsächlich der Schalterstrom, aber auch zusätzlich der Einfluss der durch die Erfassungsspule transformierten Eingangsspannung V_{IN} gemessen.

Diese Eingangsspannung kann bekanntlich eine DC-Spannung, oder insbesondere eine sinusförmig sich verändernde Wechselspannung sein.

Erfindungsgemäß wird nunmehr der Einfluss der transformierten Eingangsspannung V_{IN} auf die Schalterstrommessung wie folgt in Kauf genommen, aber bei der folgenden Auswertung berücksichtigt:

Während der Schalterstrommessung wird die an dem Abgriffspunkt P_{ZXCS} anliegende Spannung durch einen Komparator mit einem Referenzwert verglichen, der den maximal zulässigen Schalterstrom repräsentiert.

Dieser Referenzwert. (Schwellenwert) wird nunmehr erfindungsgemäß abhängig von dem aktuellen Wert der Eingangsspannung V_{IN} verändert, so dass der Einfluss der transformierten Eingangsspannung V_{IN} auf die Schalterstrommessung durch zeitnahe Veränderung des Referenzwerts nachgebildet wird und somit für die Messung kompensiert werden kann.

Es ist also ein Komparator vorgesehen, dessen Referenzspannung durch die Steuer- und/oder Regeleinheit bspw. digital vorgegeben und dann D/A-gewandelt wird. Die Referenzspannung wird dabei während der Durchführung einer Messung verändert.

Die Eingangsspannung kann beispielsweise wie in Fig. 5 dargestellt gemessen werden oder aber auch indirekt ermittelt werden.

Der Beitrag der Eingangsspannung zur Messung des Schalterstroms ist aufgrund des bekannten Transformationsverhältnisses (von beispielsweise 1:10) von der Ladespule L1 zu der Ladespule L2 bekannt und kann somit stets aus dem aktuellen Wert der Eingangsspannung V_{IN} berechnet werden.

Wenn der Schalterstrom beispielsweise mindestens 100mal pro Halbwelle einer sinusförmigen Eingangsspannung V_{IN} erfasst wird, kann der Referenz-Schwellenwert für die Überstromerfassung des Schalters M1 entsprechend geändert werden.

Die Eingangsspannung kann wie gesagt direkt gemessen werden, aber auch indirekt berechnet werden. Die indirekte Berechnung kann beispielsweise über die Einschalt-/Ausschaltzeitdauern des FET-Schalters M1 berechnet werden.

Erfindungsgemäß kann an dem Punkt V_{DD} eine kleine Spannung, wie beispielsweise die Versorgungsspannung der Steuer- und/oder Regeleinheit (beispielsweise ASIC) angelegt werden. Diese Spannung V_{DD} ergibt somit einen konstanten Offset am Erfassungspunkt P_{ZXCS}, was verhindert, dass das bei der Messung eine Messung im Bereich des Nullwerts mit entsprechend instabiler Referenz erfolgen muss.

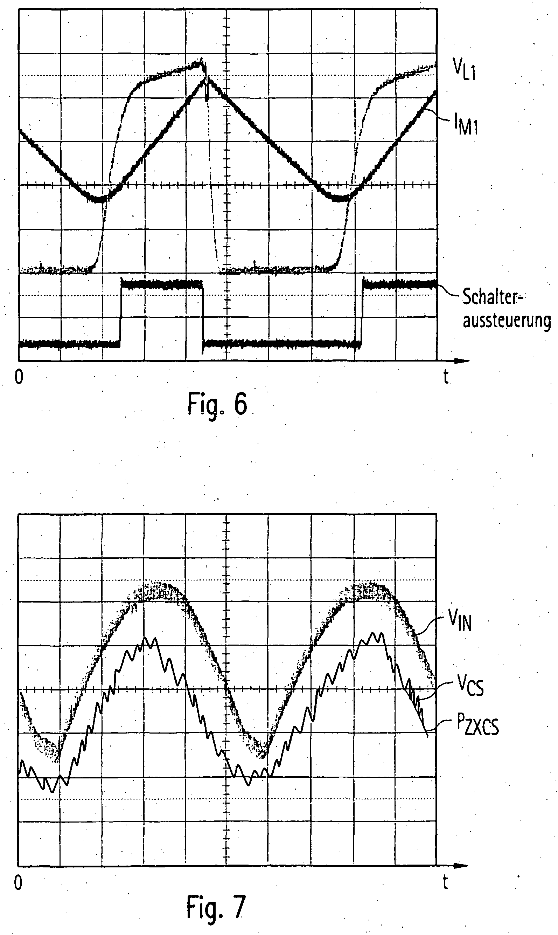

In Fig. 6 ist der zeitliche Verlauf für die Messung des Spulenstroms V_{L1}, des Schalterstroms I_{M1} sowie die Schalteransteuerspannung dargestellt.

In Fig. 7 ist ersichtlich, wie bei dem Ausführungsbeispiel von Fig. 5 an dem Punkt P_{ZXCS} eine Spannung gemessen wird, deren Häuptbeitrag synchron zum Verlauf der Eingangsspannung V_{IN} verläuft. Bei der Messung des Schalterstroms VZS muss also der Referenzwert dementsprechend laufend verändert werden. Wie aus Fig. 7 ersichtlich soll nämlich bei der Messung des Schalterstroms nur der im Vergleich zur Eingangsspannung V_{IN} hochfrequentere Schalterstrombeitrag V_{ZS} gemessen werden. Anzumerken ist, dass zur besseren Darstellung in Figur 7 die beiden Kurven, die eigentlich übereinander liegen, bezüglich ihrer jeweiligen Nullachsen verschoben sind.

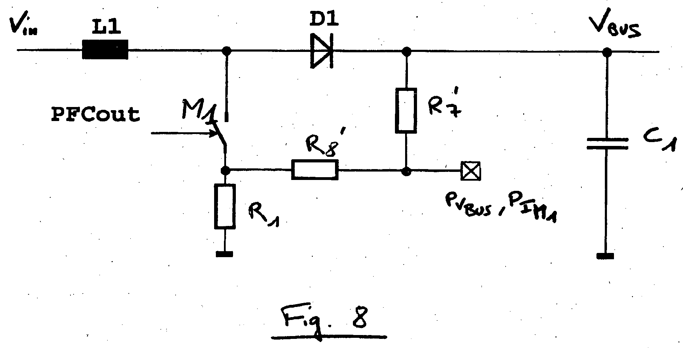

In Figur 8 ist ein weiteres Ausführungsbeispiel einer PFC-Boost-Schaltung gemäß der vorliegenden Erfindung gezeigt.

Die diesem Ausführungsbeispiel zugrundeliegende Schaltung enthält eine Ladespule L1, der eine Eingangswechselspannung Vᵢₙ zugeführt wird. Die Ladespule L1 ist vor einer Freilauf diode D1 in Serie geschaltet, wobei an der Verbindung zwischen der Ladespule L1 und der Freilaufdiode D1 ein steuerbarer Schalter-M1 angeschlossen ist.

Ist der Schalter M1 eingeschaltet, so ist die Ladespule L1 gegen Masse kurzgeschlossen und die Freilaufdiode D1 gesperrt. Die Ladespule L1 lädt sich dann auf und Energie wird dadurch in der Ladespule L1 gespeichert.

Wenn der Schalter M1 hingegen ausgeschaltet ist, ist die Freilaufdiode D1 leitend. Die Ladespule entlädt sich dann über die Freilaufdiode D1 in einen Ladekondensator C1, der die Freilaufdiode D1 mit Masse verbindet und einer Ausgangsspannung V_{bus} ausgesetzt ist.

Ein Strommeßwiderstand (Shunt) R1 in der Source-Leitung des Schalters M1 ermöglicht im geschlossenen Zustand des Schalters M1 die Erfassung des durch diesen Schalter M1 fließenden Stroms, um beispielsweise einen eventuellen Überstromzustand feststellen zu können.

Parallel zu dem Ladekondensator C1 ist ein Spannungsteiler R7', R8' angeordnet, um die Ausgangsgleichspannung V_{bus} an einem Pin PV_{bus}, PI_{M1} zu messen und dementsprechend einen Überspannungszustand beispielsweise aufgrund von Lastsprüngen feststellen zu können. Der Spannungsteiler R7', R8' ist zwischen der Source-Leitung des Schalters M1 und einem die Ausgangsspannung V_{bus} bereitstellenden Ausgangspunkt angeordnet.

Wenn der Schalter M1 offen ist, kann die Ausgangsspannung Vbus über einen erweiterten Spannungsteiler R7', R8' und R1 über den Pin PV_{bus}, PI_{M1} gemessen werden. Dieser Meßwert wird der Steuer- und/oder Regeleinheit zugeführt, welche dann über das Ein- und Ausschalten des Schalters M1 die Busspannung entsprechend regeln kann.

Die erfasste Ausgangsspannung bzw. Busspannung Vbus wird auch zu Zeiten, zu denen der Schalter M1 geschlossen ist, von der Steuer und/oder Regelschaltung zur Erfassung des Schalterstroms I_{M1} benutzt. In der Tat, wenn der Schalter geschlossen ist, erfolgt eine Überstromerfassung durch Vergleich des Schalterstroms mit einem Schwellenwert bzw. Referenzwert. Während der Schalterstrommessung wird die an dem Abgriffpunkt PVbus, PI_{M1} anliegende Spannung durch einen Komparator mit diesem Referenzwert verglichen, der den maximal zulässigen Schalterstrom repräsentiert.

Die Busspannung Vbus liefert bei dieser Messung mit geschlossenem Schalter einen bekannten Beitrag zur Strommessung, so dass dieser Referenzwert erfindungsgemäß abhängig von dem aktuellen Wert der Busspannung Vbus verändert wird. Der Einfluss der Busspannung auf die Schalterstrommessung kann demnach durch zeitnahe Veränderung des Referenzwertes nachgebildet werden und entsprechend für die Messung während der Einschaltzeitdauer des Schalters M1 kompensiert werden.

Es ist ein Komparator vorgesehen, dessen Referenzspannung bzw. Referenzwert durch die Steuer und /oder Regeleinheit bspw. digital vorgegeben und dann D/A -gewandelt wird.

Als dynamische Referenz wird der zuletzt gemessene Busspannungswert verwendet
Die Referenzspannung wird dabei während.

Die Referenzspannung wird dabei vorzugsweise während der Durchführung einer Busspannung -Messung verändert, um den Beitrag des durch den Schalter M1 fließenden Stroms nicht zu berücksichtigen.

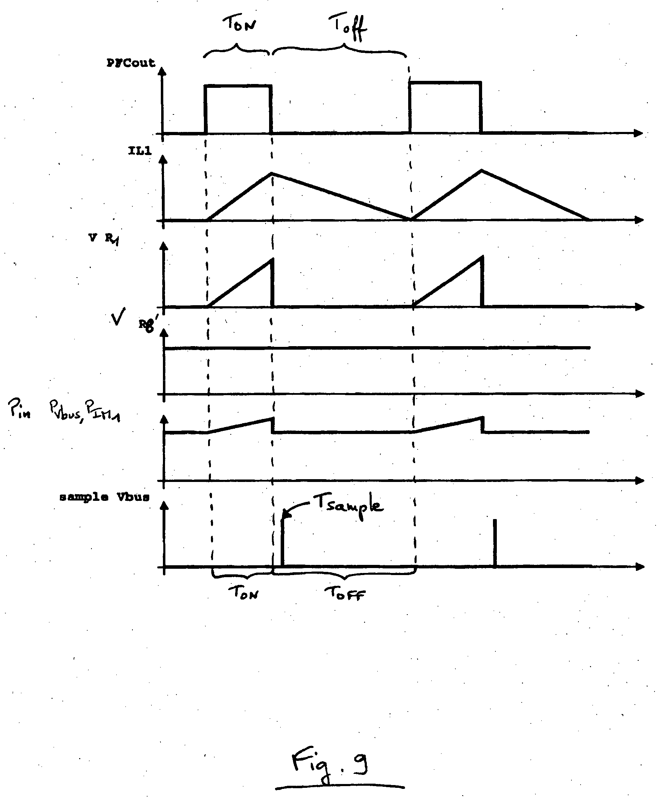

Diese Aktualisierung der Referenzspannung wird vorzugsweise von einem entsprechenden Signal "sample Vbus" gesteuert, und erfolgt wie in Fig. 9 ersichtlich vorzugsweise bei t=Tsample während der Ausschaltzeitdauer Toff des Schalters M1. Um sicher zu sein, dass der Referenzwert noch in der Ausschaltzeit von M1 verändert wird, ist es zweckmäßig, diese Aktualisierung kurz nach Ausschalten des Schalters M1 durchzuführen, sehe Fig. 9.

Mit einer typischen Abtastrate von 1/200 µs ist die Regelung auf die Busspannung Vbus gegenüber einer typischen Einschaltzeitdauer Ton des Schalters M1 von 25 µs verhältnismäßig langsam. Somit kann die Busspannung während dieser Einschaltzeitdauer Ton auch als konstant gesehen werden. Es spielt keine Rolle, dass die Busspannungs-Isterfassung in dieser Zeit Ton auch blind ist.

Die Verläufe der verschiedenen in der Schaltung von Fig. 8 auftretenden Spannungen und Ströme sind in Fig. 9 gezeigt.

PFCout ist die Ansteuerspannung, die von der Steuer bzw. Regeleinheit zur Ansteuerung des Schalters M1 ausgegeben wird.

Weiterhin zeigt IL1 den Strom durch die Ladespule L1, der während der Einschaltzeitdauer Ton des Schalters M1 zunimmt und während der Ausschaltzeitdauer Toff auf Null fällt.

Die am Pin PV_{bus}, PI_{M1} gemessene Spannung setzt sich aus einer im wesentlichen konstanten Spannung V_{R8'} des Widerstands R8' und einer Spannung V_{R1}. Die letztere Spannung V_{R1} des Widerstands R1 steigt sobald der Schalter M1 geschlossen ist und spiegelt den Anstieg des durch diesen Schalter M1 fließenden Stroms wider.

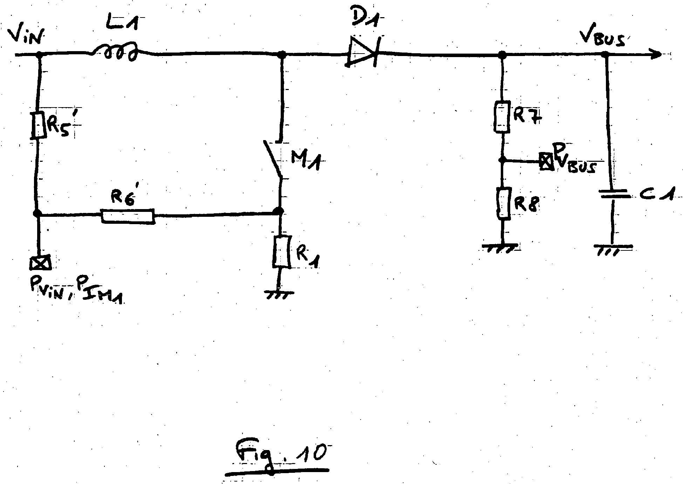

In Fig. 10 ist ein weiteres Ausführungsbeispiel einer PFC-Boost-Schaltung gemäß der vorliegenden Erfindung gezeigt.

Diese Schaltung ändert sich dahingehend von der in Fig. 7 gezeigten Schaltung, dass diesmal an einem einzigen Pin PVᵢₙ, PI_{M1} bei geöffnetem bzw. geschlossenem Schalter M1 alternativ die Eingangsspannung Vin der PFC-Boost-Schaltung und der Schalterstrom I_{M1} gemessen werden kann.

Die angelegte Eingangsspannung bzw. Versorgungsspannung Vin wird über einen Spannungsteiler R5', R6' erfasst. Diese Spannungserfassung erfolgt in der Ausschaltzeitdauer Toff des Boost-Schalters M1, ähnlich wie die Erfassung der Ausgangsspannung Vbus in der in Fig. 8 gezeigten PFC-Schaltung.

Bei geschlossenem Schalter M1 erfolgt die Schalterstromerfassung durch Vergleich des Schalterstroms mit einem Referenzwert. Dieser Referenzwert wird wie bei der in Fig. 8 gezeigten Schaltung vorzugsweise bei jedem Schaltzyklus während der Ausschaltzeitdauer des Schalters M1 durchgeführt und dem aktuellen Wert der Ausgangsspannung Vbus angepasst.

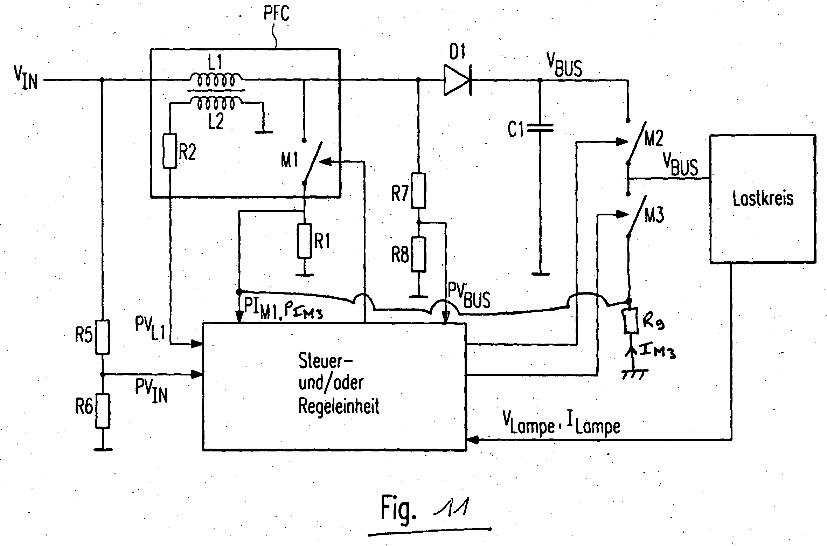

Bei dem in Fig. 11 gezeigten Ausführungsbeispiel einer PFC-Boost-Schaltung gemäß der vorliegenden Erfindung werden der durch den Boost-Schalter M1 fließende Strom sowie der Strom durch eine von der Ausgangsspannung Vbus gespeiste Halbbrücke (M2, M3) erfasst. Diese Erfässungen werden am selben Pin PI_{M1}, PI_{M3} und sequentiell in unterschiedlichen Zeitpunkten ausgeführt.

Ist der Schalter M1 geöffnet, so kann vom Pin PI_{M1}, PI_{M3} direkt der Halbbrückenstrom IM3 erfasst werden.

Ist der Schalter M1 geschlossen, kann der Strom durch diesen Schalter M1 erfasst werden und zwar unter Berücksichtigung des Beitrags des Halbbrückenstroms IM3.

Hierzu wird der am Pin PI_{M1}, PI_{M3} gemessenen Wert - ähnlich wie bei den zuvor beschriebenen Ausführungsbeispielen - mit einem Referenzwert verglichen, und zwar mit dem zuletzt erfassten Halbbrückenstrom IM3.

## Patentansprüche

1. Verfahren zum Betrieb einer Hochsetzsteller-Leistungsfaktorkorrekturschaltung (Boost-PFC), wobei die Schaltung eine Freilaufdiode (D1), eine mit der Freilaufdiode (D1) in Serie geschalteten Ladespule (L1), einer Schalter (M1), einen Ladekondensator (C1) und eine elektronische Steuer- und/oder Regeleinheit aufweist, mit den Verfahrensschritten:
- Versorgen der Schaltung mit einer Eingangsspannung V_{IN},
- Aufladen des Ladekondensators (C1) mit einem durch die Ladespule (L1) erzeugten Entladestrom durch den gesteuerten Schalter (M1),
- Ein- und Ausschalten des Schalters (M1) durch die elektronische Steuer- und/oder Regeleinheit, **gekennzeichnet durch**:
- Erfassen des Stroms **durch** den Schalter (M1) an einem Eingang der Steuer- und/oder Regeleinheit in Zeitdauern, in denen der Schalter (M1) geschlossen ist,
- Erfassen eines weiteren Betriebsparameters der Boost-PFC Schaltung an dem Eingang der Steuer- und/oder Regeleinheit in Zeitdauern, in denen der Schalter (M1) geöffnet ist,
- wobei beim Erfassen des **durch** den Schalter (M1) fließenden Stroms der aktuelle Wert der Eingangsspannung V_{IN} oder der Ausgangsspannung V_{BUS} der Schaltung berücksichtigt wird und
- wobei der Strom **durch** den Schalter (M1) bzw. eine dafür repräsentative Größe mit einem Schwellenwert verglichen wird, der vom aktuellen Wert der Eingangs- bzw. Ausgangsspannung abhängt.

2. Verfahren nach Anspruch 1,
wobei der Schalter (M1) wieder ausgeschaltet wird, sobald der Schwellenwert erreicht oder überschritten wird.

3. Verfahren nach einem der vorhergehenden Ansprüche,
wobei der aktuelle Wert der Eingangs- bzw. Ausgangsspannung direkt gemessene oder indirekt ermittelt wird.

4. Verfahren nach einem der vorhergehenden Ansprüche,
wobei der erfasste weitere Betriebsparameter der Nulldurchgang des durch die Ladespule (L1) fließenden Stroms ist.

5. Verfahren nach Anspruch 4,
wobei der Nulldurchgang des durch die Ladespule (L1) fließenden Stroms mittels einer mit der Ladespule induktiv gekoppelten Erfassungsspule (L2) dadurch ermittelt wird, dass zum Zeitpunkt des Nulldurchgangs die Spannung an der Erfassungsspule (L2) eine Flanke zeigt.

6. Verfahren nach einem der Ansprüche 1 bis 3,
wobei der erfasste weitere Betriebsparameter die Ausgangsspannung der Boost-PFC-Schaltung ist.

7. Verfahren nach einem der Ansprüche 1 bis 3,
wobei der erfasste weitere Betriebsparameter die Eingangsspannung der Boost-PFC-Schaltung ist.

8. Verfahren nach einem der Ansprüche 1 bis 3,
wobei der erfasste weitere Betriebsparameter der Halbbrückenstrom einer am Ausgang der Boost-PFC-Schaltung angeordneten Halbbrücke ist.

9. Verfahren nach einem der vorhergehenden Ansprüche, wobei die Steuer- und Regeleinheit zum Zeitpunkt des Nulldurchgangs des Stroms durch die Ladespule (L1) den Schalter (M1) wieder einschaltet.

10. Hochsetzsteller-Leistungsfaktorkorrekturschaltung (Boost-PFC),
wobei die Schaltung eine Freilaufdiode (D1), eine mit der Freilaufdiode (D1) in Serie geschaltete Ladespule (L1), einen Schalter (M1), einen Ladekondensator (C1) und eine elektronische Steuer -und/oder Regeleinheit, aufweist, wobei mit einem durch die Ladespule (L1) einzeugten Entladestrom durch einen gesteuerten Schalter (M1) der Ladekondensator (C1) aufgeladen wird,
wobei der Schalter (M1) durch die elektronische Steuer- und/oder Regeleinheit ein- und ausschaltbar ist, **dadurch gekennzeichnet, dass**
die Steuer- und/oder Regeleinheit an einem Eingang
- den Strom durch den Schalter in Zeitdauern erfasst, in denen der Schalter geschlossen ist, und
- einen weiteren Betriebsparameter der Boost-PFC Schaltung in Zeitdauern erfasst, in denen der Schalter geöffnet ist,
wobei bei der Erfassung des durch den Schalter (M1) fließenden Stroms der aktuelle Wert der Eingangsspannung V_{IN} oder der Ausgangsspannung V_{BUS} der Schaltung berücksichtigt wird und dass die Steuer- und/oder Regeleinheit den Strom durch den Schalter bzw. eine dafür repräsentative Größe mit einem Schwellenwert vergleicht, der vom aktuellen Wert der Eingangs- bzw. Ausgangsspannung abhängt.

11. Schaltung nach Anspruch 10,
wobei die Steuer- und/oder Regeleinheit dazu ausgelegt ist, den Schalter (M1) wieder auszuschalten, sobald der Schwellenwert erreicht oder überschritten wird.

12. Schaltung nach einem der Ansprüche 10 bis 11,
wobei der aktuelle Wert der Eingangsspannung direkt gemessen oder indirekt ermittelt wird.

13. Schaltung nach einem der Ansprüche 10 bis 12,
wobei der erfasste weitere Betriebsparameter der Nulldurchgang des durch die Ladespule (L1) fließenden Stroms ist.

14. Schaltung nach Anspruch 13,
aufweisend Mittel zur induktiven Erfassung des Nulldurchgangs des durch die Ladespule fließenden Stroms.

15. Schaltung nach einem der Ansprüche 13 und 14,
wobei der Nulldurchgang des durch die Ladespule (L1) fließenden Stroms mittels einer mit der Ladespule induktiv gekoppelten Erfassungsspule (L2) dadurch ermittelt wird, dass zum Zeitpunkt des Nulldurchgangs die Spannung an der Erfassungsspule (L2) eine Flanke zeigt.

16. Schaltung nach einem der Ansprüche 10 bis 12,
wobei der erfasste weitere Betriebsparameter die Ausgangsspannung der Boost-PFC-Schaltung ist.

17. Schaltung nach einem der Ansprüche 10 bis 12,
wobei der erfasste weitere Betriebsparameter die Eingangsspannung der Boost-PFC-Schaltung ist.

18. Schaltung nach einem der Ansprüche 10 bis 12,
wobei der erfasste weitere Betriebsparameter der Halbbrückenstrom einer am Ausgang der Boost-PFC-Schaltung angeordneten Halbbrücke ist.

19. Schaltung nach einem der Ansprüche 10 bis 18,
wobei die Steuer- und Regeleinheit zum Zeitpunkt des Nulldurchgangs des Stroms durch die Ladespule (L1) den Schalter (M1) wieder einschaltet.

20. Elektronisches Vorschaltgerät für Gasentladungslampen, aufweisend eine Schaltung nach einem der Ansprüche 10 bis 19.

## Claims

1. Method for operating a boost converter power factor correction circuit (Boost-PFC), wherein the circuit has a freewheeling diode (D₁), a charging coil (L₁) connected in series with the freewheeling diode (D₁), a switch (M₁), a load capacitor (C₁) and an electronic control unit and/or regulation unit, with the method steps:
- supplying the circuit with an input voltage V_{IN},
- charging the load capacitor (C₁) with a discharging current generated by the charging coil (L₁) through the controlled switch (M₁),
- switching on and off the switch (M1) by means of the electronic control unit and/or regulation unit, **characterized by**:
- detecting the current by means of the switch (M1) at an input of the control unit and/or regulation unit in time periods in which the switch (M1) is closed,
- detecting a further operating parameter of the Boost PFC circuit at the input of the control unit and/or regulation unit in time periods in which the switch (M1) is opened,
- wherein during the detection of the current flowing through the switch (M1) the current value of the input voltage V_{IN} or the output voltage V_{BUS} of the circuit is being taken into consideration and
- wherein the current through the switch (M1) respectively a dimension representative for it is being compared with a threshold value that depends on the current value of the input voltage respectively output voltage.

2. Method according to claim 1, wherein the switch (M1) is switched off again as soon as the threshold value is reached or exceeded.

3. Method according to one of the preceding claims, wherein the current value of the input voltage respective output voltage are measured directly or determined indirectly.

4. Method according to one of the preceding claims, wherein the detected further operating parameter is the zero crossing of the current flowing through the charging coil (L1).

5. Method according to claim 4, wherein the zero crossing of the current flowing through the charging coil (L₁) is being determined via a detection coil (L₂) inductively coupled with the charging coil by the voltage on the detection coil (L₂) showing a slope at the instant of time of the zero crossing.

6. Method according to one of the claims 1 to 3, wherein the detected further operating parameter is the output voltage of the Boost PFC circuit.

7. Method according to one of the claims 1 to 3, wherein the detected further operating parameter is the input voltage of the Boost PFC circuit.

8. Method according to one of the claims 1 to 3, wherein the detected further operating parameter is the half bridge current of a half bridge arranged on the output of the Boost PFC circuit.

9. Method according to one of the preceding claims, wherein the control unit and regulation unit switches the switch (M1) on again at the instant of time of the zero crossing of the current through the charging coil (L1).

10. Boost converter power factor correction circuit (Boost-PFC), wherein the circuit has a freewheeling diode (D₁), a charging coil (L₁) connected in series with the freewheeling diode (D₁), a switch (M₁), a load capacitor (C₁) and an electronic control unit and/or regulation unit, wherein the load capacitor (C₁) is charged with a discharging current generated by the charging coil (L₁) through a controlled switch (M₁),
wherein the switch (M1) can be switched on and off by means of the electronic control unit and/or regulation unit, **characterized in that** the control unit and/or regulation unit on an input
- detects the current through the switch in time periods in which the switch is closed, and
- detects a further operating parameter of the Boost PFC circuit in time periods in which the switch is opened,
wherein during the detection of the current flowing through the switch (M1) the current value of the input voltage V_{IN} or the output voltage V_{BUS} of the circuit is being taken into consideration and **in that** the control unit and/or regulation unit compares the current through the switch respective a dimension representative for it with a threshold value that depends on the current value of the input voltage respectively output voltage.

11. Circuit according to claim 10, wherein the control unit and/or regulation unit is designed to switch the switch (M1) off again as soon as the threshold value is reached or exceeded.

12. Circuit according to one of the claims 10 to 11, wherein the current value of the input voltage is measured directly or determined indirectly.

13. Circuit according to one of the claims 10 to 12, wherein the detected further operating parameter is the zero crossing of the current flowing through the charging coil (L1).

14. Circuit according to claim 13, having means for inductively detecting the zero crossing of the current flowing through the charging coil.

15. Circuit according to one of the claims 13 and 14, wherein the zero crossing of the current flowing through the charging coil (L₁) is being determined via a detection coil (L₂) inductively coupled with the charging coil by the voltage on the detection coil (L₂) showing a slope at the instant of time of the zero crossing.

16. Circuit according to one of the claims to to 12, wherein the detected further operating parameter is the output voltage of the Boost PFC circuit.

17. Circuit according to one of the claims 10 to 12, wherein the detected further operating parameter is the input voltage of the Boost PFC circuit.

18. Circuit according to one of the claims 10 to 12, wherein the detected further operating parameter is the half bridge current of a half bridge arranged on the output of the Boost PFC circuit.

19. Circuit according to one of the claims 10 to 18, wherein the control unit and regulation unit switches the switch (M1) on again at the instant of time of the zero crossing of the current through the charging coil (L1).

20. Electronic ballast for gas discharge lamps, having a circuit according to one of the claims 10 to 19.

## Revendications

1. Procédé servant à faire fonctionner un circuit de correction du facteur de puissance d'un hacheur élévateur (Boost-PFC), dans lequel le circuit possède une diode de retour (D1), une bobine de charge (L1) reliée en série à la diode de retour (D1), un commutateur (M1), un condensateur de charge (C1) et une unité de commande et/ou de réglage électronique, avec les étapes de procédé :
- alimenter le circuit avec une tension d'entrée V_{IN},
- charger le condensateur de charge (C1) avec un courant de décharge généré par la bobine de charge (L1) par l'intermédiaire du commutateur de contrôle (M1),
- mise sous tension et hors tension du commutateur (M1) au moyen de l'unité de commande et/ou de réglage électronique , **caractérisé par** :
- détecter le courant au moyen du commutateur (M1) à une entrée de l'unité de commande et/ou de réglage lors de périodes au cours desquelles le commutateur (M1) est fermé,
- détecter un paramètre de fonctionnement supplémentaire du circuit boost-PFC à l'entrée de l'unité de commande et/ou de réglage lors de périodes au cours desquelles le commutateur (M1) est ouvert,
- dans lequel lors de la détection du courant circulant à travers le commutateur (M1), la valeur en cours de la tension d'entrée V_{IN} ou de la tension de sortie V_{BUS} du circuit est prise en considération et
- dans lequel le courant circulant à travers le commutateur (M1) ou une dimension représentative pour celui-ci est comparé à une valeur seuil qui dépend de la valeur en cours de la tension d'entrée ou de la tension de sortie.

2. Procédé selon la revendication 1, dans lequel le commutateur (M1) est à nouveau mis hors tension dès que la valeur seuil est atteinte ou dépassée.

3. Procédé selon l'une des revendications précédentes, dans lequel la valeur en cours de la tension d'entrée et/ou de la tension de sortie sont mesurées directement ou déterminées indirectement.

4. Procédé selon l'une des revendications précédentes, dans lequel le paramètre de fonctionnement supplémentaire détecté est le point zéro du courant à travers la bobine de charge (L1).

5. Procédé selon la revendication 4, dans lequel le point zéro du courant circulant à travers la bobine de charge (L1) est déterminé via une bobine de détection (L2) à couplage inductif avec la bobine de charge par la tension sur la bobine de détection (L₂) indiquant un flanc à l'instant dans le temps du point zéro.

6. Procédé selon l'une des revendications de 1 à 3, dans lequel le paramètre de fonctionnement supplémentaire détecté est la tension de sortie du circuit boost-PFC.

7. Procédé selon l'une des revendications de 1 à 3, dans lequel le paramètre de fonctionnement supplémentaire détecté est la tension d'entrée du circuit boost-PFC.

8. Procédé selon l'une des revendications de 1 à 3, dans lequel le paramètre de fonctionnement supplémentaire détecté est la tension en demi-pont d'un demi-pont disposé sur la sortie du circuit boost-PFC.

9. Procédé selon l'une des revendications précédentes, dans lequel l'unité de commande et de réglage mettent à nouveau sous tension le commutateur (M1) à l'instant dans le temps du point zéro du courant à travers la bobine de charge (L1).

10. Circuit de correction du facteur de puissance d'un hacheur élévateur (Boost-PFC), dans lequel le circuit possède une diode de retour (D1), une bobine de charge (L1) reliée en série à la diode de retour (D1), un commutateur (M1), un condensateur de charge (C1) et une unité de commande et/ou de réglage électronique, dans lequel le condensateur de charge (C1) est chargé avec un courant de décharge généré par la bobine de charge (L1) par l'intermédiaire d'un commutateur de contrôle (M1),
dans lequel le commutateur (M1) peut être mis sous tension et hors tension au moyen de l'unité de commande et/ou de réglage électronique, **caractérisé en ce que** l'unité de commande et/ou de réglage sur une entrée :
- détecte le courant à travers le commutateur lors de périodes au cours desquelles le commutateur est fermé, et
- détecte un paramètre de fonctionnement supplémentaire du circuit boost-PFC lors de périodes au cours desquelles le commutateur est ouvert,
dans lequel lors de la détection du courant circulant à travers le commutateur (M₁), la valeur en cours de la tension d'entrée V_{IN} ou de la tension de sortie V_{BUS} du circuit est prise en considération et **en ce que** l'unité de commande et/ou de réglage compare le courant à travers le commutateur ou une dimension représentative pour celui-ci avec une valeur seuil qui dépend de la valeur en cours de la tension d'entrée ou de la tension de sortie.

11. Circuit selon la revendication 10, dans lequel l'unité de commande et/ou de réglage est conçue pour mettre à nouveau hors tension le commutateur (M1) dès que la valeur seuil est atteinte ou dépassée.

12. Circuit selon l'une des revendications de 10 à 11, dans lequel la valeur en cours de la tension d'entrée est mesurée directement ou déterminée indirectement.

13. Circuit selon l'une des revendications de 10 à 12, dans lequel le paramètre de fonctionnement supplémentaire détecté est le point zéro du courant circulant à travers la bobine de charge (L1).

14. Circuit selon la revendication 13, ayant des moyens destinés à détecter par induction le point zéro du courant circulant à travers la bobine de charge.

15. Circuit selon l'une des revendications 13 et 14, dans lequel le point zéro du courant circulant à travers la bobine de charge (L₁) est déterminé via une bobine de détection (L₂) à couplage inductif avec la bobine de charge par la tension sur la bobine de détection (L₂) indiquant un flanc à l'instant dans le temps du point zéro.

16. Circuit selon l'une des revendications de 10 à 12, dans lequel le paramètre de fonctionnement supplémentaire détecté est la tension de sortie du circuit boost-PFC.

17. Circuit selon l'une des revendications de 10 à 12, dans lequel le paramètre de fonctionnement supplémentaire détecté est la tension d'entrée du circuit boost-PFC.

18. Circuit selon l'une des revendications de 10 à 12, dans lequel le paramètre de fonctionnement supplémentaire détecté est la tension en demi-pont d'un demi-pont disposé sur la sortie du circuit boost-PFC.

19. Circuit selon l'une des revendications de 10 à 18, dans lequel l'unité de commande et l'unité de réglage mettent à nouveau sous tension le commutateur (M1) à l'instant dans le temps du point zéro du courant à travers la bobine de charge (L1).

20. Ballast électronique pour lampes à gaz à décharge ayant un circuit selon l'une des revendications de 10 à 19.
